# EUROPEAN PATENT SPECIFICATION

(11) **EP 3 038 296 B1**
(45) Date of publication and mention of the grant of the patent: **20.06.2018**
(21) Application number: 14846703.8
(22) Date of filing: 14.08.2014
(51) Int. Cl.: H04L 12/46, H04L 29/08, H04L 29/14

(54) **POOL ELEMENT STATUS INFORMATION SYNCHRONIZATION METHOD, POOL REGISTER AND POOL ELEMENT**
SYNCHRONISATIONSVERFAHREN FÜR POOLELEMENT-STATUSINFORMATIONEN , POOLREGISTER UND POOLELEMENT
PROCÉDÉ DE SYNCHRONISATION D'INFORMATIONS D'ÉTAT D'ÉLÉMENTS DE POOL, REGISTRE DE POOL ET ÉLÉMENT DE POOL

(30) Priority: 22.09.2013 CN 201310436540
(43) Date of publication of application: 29.06.2016
(73) Proprietor: Huawei Technologies Co., Ltd., Longgang District Shenzhen, Guangdong 518129 (CN)
(72) Inventor: WANG, Yang, Shenzhen Guangdong 518129 (CN); ZHENG, Hewen, Shenzhen Guangdong 518129 (CN); GUO, Kai, Shenzhen Guangdong 518129 (CN); ZHANG, Bo, Shenzhen Guangdong 518129 (CN)
(74) Representative: Körber, Martin Hans
(86) International application number: PCT/CN2014/084412
(87) International publication number: WO 2015/039512

(56) References cited:
- WO-A1-2012/019471
- CN-A- 1 745 541
- CN-A- 101 924 842
- US-A1- 2004 151 111
- DREIBHOLZ T ET AL: "Implementing the reliable server pooling framework", TELECOMMUNICATIONS, 2005. CONTEL 2005. PROCEEDINGS OF THE 8TH INTERNAT IONAL CONFERENCE ON ZAGREB, CROATIA JUNE 15-17, 2005, PISCATAWAY, NJ,IEEE, US, vol. 1, 15 June 2005 (2005-06-15), pages 21-28, XP010810279, ISBN: 978-953-184-081-1
- LEI CISCO SYSTEMS P ET AL: "An Overview of Reliable Server Pooling Protocols; rfc5351.txt", AN OVERVIEW OF RELIABLE SERVER POOLING PROTOCOLS; RFC5351.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 September 2008 (2008-09-01), XP015060326,
- ZONG L DUNBAR HUAWEI TECHNOLOGIES M SHORE NO MOUNTAIN SOFTWARE N: "Problem Statement for Reliable Virtualized Network Function (VNF); draft-zong-vnfpool-problem-statement-01.tx t", PROBLEM STATEMENT FOR RELIABLE VIRTUALIZED NETWORK FUNCTION (VNF); DRAFT-ZONG-VNFPOOL-PROBLEM-STATEMENT-01.TX T, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 6 September 2013 (2013-09-06), pages 1-13, XP015093277, [retrieved on 2013-09-06]

## Description

### TECHNICAL FIELD

The present invention relates to the field of communications technologies, and in particular, to a pool element status information synchronization method, a pool register, and a pool element.

### BACKGROUND

In a conventional data center, service nodes generally exist in a physical form, have a limited quantity and fixed locations, and are manually configured. However, network functions virtualization (NFV) brings about new requirements:
1. A virtualized multi-tenant requirement: Service separation of tenants requires each tenant network to have a different type and quantity of pool elements (PE).
2. Cloud and interconnection of data centers: Multiple data centers are interconnected to form a virtual cloud data center, resulting in a large increase in a quantity of PEs, and moreover, a PE may be deployed at any place.
3. After original service nodes supported by dedicated hardware are virtualized, independent high performance of the service nodes are replaced by virtual machines, and a decrease in relative performance leads to a decrease in PE efficiency. Load also becomes heavier as a quantity of tenants increases, resulting in that a fault or overload easily occurs.

In conclusion, after a network function is virtualized, how a large quantity of PEs in a pool of network functions virtualization provide a virtual service becomes more complex, and especially in aspects of achieving reliability, high availability, and scalability of the virtual service, an existing pool of network functions virtualization provides no method for achieving reliability, high availability, and scalability of the virtual service.

US20040151111A1 discloses that an ENRP server receives registration information from each of a first pool element (PE) and a second PE, wherein the registration information received from each PE includes a same pool handle. The registration information from the first PE further includes a redundancy model. The ENRP server creates a pool that includes both the first and second PEs and adopts, for the pool, the received redundancy model. A pool user (PU) may then access the pool by conveying the pool handle to the ENRP server, and, in response, receiving transport addresses corresponding to the PEs and the redundancy model implemented by the pool. The PU can then access the pool based on the received transport addresses and, when appropriate, the received redundancy model.

### SUMMARY

To meet an increasingly strong requirement for network functions virtualization, embodiments of the present invention provide a PE status information synchronization method and a pool register. The invention is defined by the independent claims. In a first aspect a pool element, PE, status information synchronization method, is provided, the method comprising:
receiving, by a pool register, PR, a first registration message sent by a first PE, wherein the first registration message is used to add the first PE to a pool, and the first registration message carries an identifier of the first PE and capability information of the first PE, wherein the capability information of the first PE comprises at least one of a throughput, performance, load, and a service related capability of the first PE;
receiving, by the PR, a second registration message sent by a second PE, wherein the second registration message is used to add the second PE to the pool, and the second registration message carries an identifier of the second PE and capability information of the second PE, wherein the capability information of the second PE comprises at least one of a throughput, performance, load, and a service related capability of the second PE;
determining, by the PR, a role of the first PE in the pool according to the identifier of the first PE, the capability information of the first PE, the identifier of the second PE, and the capability information of the second PE, wherein the role is an active PE or a standby PE; and
sending, by the PR, a status synchronization manner, the identifier of the first PE, and information about the role of the first PE in the pool to the second PE, by
extending an Aggregate Server Access Protocol, ASAP, protocol message.

In a first possible implementation manner of the first aspect, the status synchronization manner is:
sending, by an active PE in the pool, status information to the PR, and sending, by the PR, the status information to a standby PE in the pool; or
sending, by an active PE in the pool, status information to a third-party device, and sending, by the third-party device, the status information to a standby PE in the pool; or
sending, by an active PE in the pool, status information to the PR, requesting, by a standby PE in the pool, to acquire the status information from the PR, and sending, by the PR, the status information to the standby PE in the pool; or
sending, by an active PE in the pool, status information to a third-party device, requesting, by a standby PE in the pool, to acquire the status information from the third-party device, and sending, by the third-party device, the status information to the standby PE in the pool; or
synchronizing, by an active PE in the pool, status information to a standby PE in the pool.

In a second possible implementation manner of the first aspect, the identifier of the first PE includes at least one of address information, serial number information, and priority level information of the first PE, and the identifier of the second PE includes at least one of address information, serial number information, and priority level information of the second PE.

According to a second aspect, a pool register (PR) is provided, including:
a receiving module, configured to receive a first registration message sent by a first pool element, PE, wherein the first registration message is used to add the first PE to a pool, and the first registration message carries an identifier of the first PE and capability information of the first PE, wherein the capability information of the first PE comprises at least one of a throughput, performance, load, and a service related capability of the first PE; and configured to receive a second registration message sent by a second PE, wherein the second registration message is used to add the second PE to the pool, and the second registration message carries an identifier of the second PE and capability information of the second PE, wherein the capability information of the
   second PE comprises at least one of a throughput, performance, load, and a service related capability of the second PE;
a determining module, configured to determine a role of the first PE in the pool according to the identifier of the first PE, the capability information of the first PE, the identifier of the second PE, and the capability information of the second PE, wherein the role is an active PE or a standby PE; and
a sending module, configured to send a status synchronization manner, the identifier of the first PE, and information about the role of the first PE in the pool to the second PE, by extending an Aggregate Server Access Protocol, ASAP, protocol message.

In a first implementation manner of the second aspect the capability information of the first PE includes at least one of a throughput, performance, load, and a service related capability of the first PE, and the capability information of the second PE includes at least one of a throughput, performance, load, and a service related capability of the second PE.

According to a third aspect, a PE is provided, where the PE is a first PE, including:
a sending module, configured to send a registration message to a pool register, PR, wherein the registration message is used to add the PE to a pool, and the registration message carries an identifier of the PE and capability information of the PE, wherein the capability information of the PE comprises at least one of a throughput, performance, load, and a service related capability of the PE; and
a receiving module, configured to receive a status synchronization manner, an identifier of a second PE, and information about a role of the second PE in the pool that are sent by the PR by extending an Aggregate Server Access Protocol, ASAP, protocol message, wherein the information about the role is information that the second PE is an active PE or a standby PE.

According to the embodiments of the present invention, a flexible high availability (HA) mechanism is achieved. An HA role, a status synchronization source, and a status synchronization method are dynamically bound with a pool element role, leading to good expansibility, and it can be supported that more pool elements are added to a pool element pool to obtain high reliability. Moreover, synchronization links can be reduced, so that costs are greatly reduced, and a large-scale deployment of network functions virtualization can be better achieved.
including:
a sending module, configured to send a registration message to a pool register, PR, wherein the registration message is used to add the PE to a pool, and the registration message carries an identifier of the PE and capability information of the PE, wherein the capability information of the PE comprises at least one of a throughput, performance, load, and a service related capability of the PE; and
a receiving module, configured to receive a status synchronization manner, an identifier of a second PE, and information about a role of the second PE in the pool that are sent by the PR by extending an Aggregate Server Access Protocol, ASAP, protocol message, wherein the information about the role is information that the second PE is an active PE or a standby PE.

In a first implementation manner of the third aspect the status synchronization manner is: sending, by an active PE in the pool, status information to the PR, and sending, by the PR, the status information to a standby PE in the pool; or
sending, by an active PE in the pool, status information to a third-party device, and sending, by the third-party device, the status information to a standby PE in the pool; or
sending, by an active PE in the pool, status information to the PR, requesting, by a standby PE in the pool, to acquire the status information from the PR, and sending, by the PR, the status information to the standby PE in the pool; or
sending, by an active PE in the pool, status information to a third-party device, requesting, by a standby PE in the pool, to acquire the status information from the third-party device, and sending, by the third-party device, the status information to the standby PE in the pool; or
synchronizing, by an active PE in the pool, status information to a standby PE in the pool.

According to the embodiments of the present invention, a flexible high availability (HA) mechanism is achieved. An HA role, a status synchronization source, and a status synchronization method are dynamically bound with a pool element role, leading to good expansibility, and it can be supported that more pool elements are added to a pool element pool to obtain high reliability. Moreover, synchronization links can be reduced, so that costs are greatly reduced, and a large-scale deployment of network functions virtualization can be better achieved.

With reference to the second aspect, or the first possible implementation manner of the second aspect, in a second possible implementation manner, the first registration message further carries capability information of the first PE, and the second registration message further carries capability information of the second PE; and the determining module is specifically configured to determine the role of the first PE in the pool according to the identifier of the first PE, the capability information of the first PE, the identifier of the second PE, and the capability information of the second PE, where the role is an active PE or a standby PE.

With reference to the second possible implementation manner of the second aspect, in a third possible implementation manner, the capability information of the first PE includes at least one of a throughput, performance, load, and a service related capability of the first PE, and the capability information of the second PE includes at least one of a throughput, performance, load, and a service related capability of the second PE.

With reference to the second aspect or the first, second, or third possible implementation manner of the second aspect, in a fourth possible implementation manner, the sending module is specifically configured to send the status synchronization manner, the identifier of the first PE, and the information about the role of the first PE by extending an ASAP protocol message or by defining a new message.

With reference to the second aspect or any one of the first to fourth possible implementation manners of the second aspect, in a fifth possible implementation manner, the status synchronization manner is:
sending, by an active PE in the pool, status information to the PR by using a synchronization link, and sending, by the PR, the status information to a standby PE in the pool by using the synchronization link; or
sending, by an active PE in the pool, status information to a third-party device by using a synchronization link, and sending, by the third-party device, the status information to a standby PE in the pool by using the synchronization link; or
sending, by an active PE in the pool, status information to the PR by using a synchronization link, requesting, by a standby PE in the pool by using the synchronization link, to acquire the status information from the PR, and sending, by the PR, the status information to the standby PE in the pool by using the synchronization link; or
sending, by an active PE in the pool, status information to a third-party device by using a synchronization link, requesting, by a standby PE in the pool by using the synchronization link, to acquire the status information from the third-party device, and sending, by the third-party device, the status information to the standby PE in the pool by using the synchronization link; or
synchronizing, by an active PE in the pool, status information to a standby PE in the pool by using a TCP link or a UDP link.

According to a third aspect, a PE is provided, where the PE is a first PE, including:
a sending module, configured to send a registration message to a PR, where the registration message is used to add the PE to a pool, and the registration message carries an identifier of the PE; and
a receiving module, configured to receive a status synchronization manner, an identifier of a second PE, and information about a role of the second PE in the pool that are sent by the PR, where the information about the role is information that the second PE is an active PE or a standby PE.

With reference to the third aspect, in a first possible implementation manner, the status synchronization manner is:
sending, by an active PE in the pool, status information to the PR, and sending, by the PR, the status information to a standby PE in the pool; or
sending, by an active PE in the pool, status information to a third-party device, and sending, by the third-party device, the status information to a standby PE in the pool; or
sending, by an active PE in the pool, status information to the PR, requesting, by a standby PE in the pool, to acquire the status information from the PR, and sending, by the PR, the status information to the standby PE in the pool; or
sending, by an active PE in the pool, status information to a third-party device, requesting, by a standby PE in the pool, to acquire the status information from the third-party device, and sending, by the third-party device, the status information to the standby PE in the pool; or
synchronizing, by an active PE in the pool, status information to a standby PE in the pool.

According to the embodiments of the present invention, a flexible high availability (HA) mechanism is achieved. An HA role, a status synchronization source, and a status synchronization method are dynamically bound with a pool element role, leading to good expansibility, and it can be supported that more pool elements are added to a pool element pool to obtain high reliability. Moreover, synchronization links can be reduced, so that costs are greatly reduced, and a large-scale deployment of network functions virtualization can be better achieved.

### BRIEF DESCRIPTION OF DRAWINGS

FIG. 1 is a flowchart of a PE status information synchronization method according to an embodiment of the present invention;
FIG. 2 is a schematic diagram of a format of an ASAP_REGISTRATION message of the IETF Rserpool ASAP protocol according to an embodiment of the present invention;
FIG. 3 is a schematic diagram of a format of an IPv4 address parameter of the IETF Rserpool ASAP protocol according to an embodiment of the present invention;
FIG. 4 is a schematic diagram of a format of an IPv6 address parameter of the IETF Rserpool ASAP protocol according to an embodiment of the present invention;
FIG. 5 is a schematic diagram of a format of a capability parameter of the IETF Rserpool ASAP protocol according to an embodiment of the present invention;
FIG. 6 is a schematic diagram of a format of an ASAP_REGISTRATION_RESPONSE message of the IETF Rserpool ASAP protocol according to an embodiment of the present invention;
FIG. 7 is a schematic diagram of a format of an information parameter of a standby role of the IETF Rserpool ASAP protocol according to an embodiment of the present invention;
FIG. 8 is a schematic diagram of a format of a status synchronization manner parameter of the IETF Rserpool ASAP protocol according to an embodiment of the present invention;
FIG. 9 is an exemplary flowchart of a PE status information synchronization method according to an embodiment of the present invention;
FIG. 10 is an exemplary diagram of a status change between an active role and a standby role according to an embodiment of the present invention;
FIG. 11 is a schematic diagram of a format of an ASAP_UPDATE message of the IETF Rserpool ASAP protocol according to an embodiment of the present invention (a pool element notifies a PR of a change in a role);
FIG. 12 is a schematic diagram of a format of an ASAP_UPDATE message of the IETF Rserpool ASAP protocol according to an embodiment of the present invention (a PR notifies a pool element of a new standby role);
FIG. 13 is a schematic structural diagram of a PR according to an embodiment of the present invention;
FIG. 14 is a schematic structural diagram of another PR according to an embodiment of the present invention;
FIG. 15 is a schematic structural diagram of a PE according to an embodiment of the present invention; and
FIG. 16 is a schematic structural diagram of another PE according to an embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention.

The following further describes the embodiments of the present invention in detail with reference to the accompanying drawings in the specification.

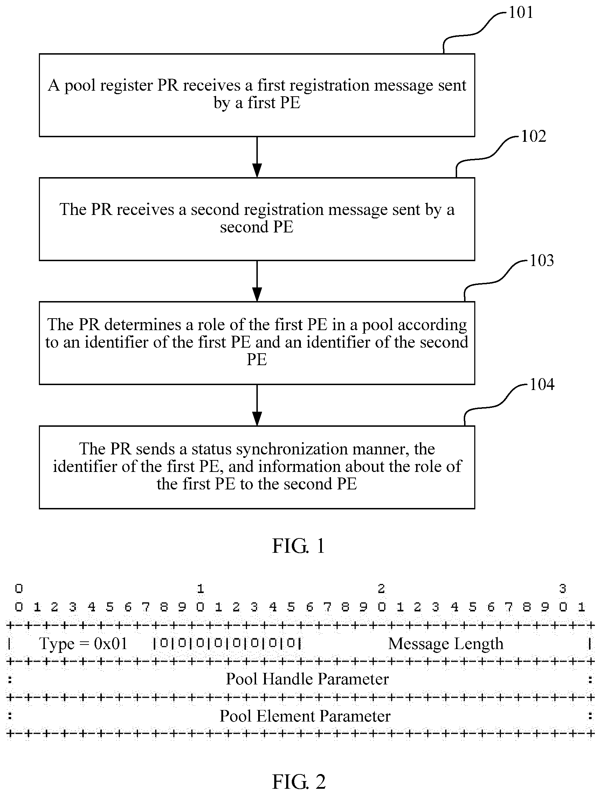

A PE status information synchronization method is designed in an embodiment of the present invention. Referring to FIG. 1, the method includes the following operations:
101: A pool register PR receives a first registration message sent by a first PE, where the first registration message is used to add the first PE to a pool, and the first registration message carries an identifier of the first PE.
102: The PR receives a second registration message sent by a second PE, where the second registration message is used to add the second PE to the pool, and the second registration message carries an identifier of the second PE.
103: The PR determines a role of the first PE in the pool according to the identifier of the first PE and the identifier of the second PE, where the role is an active PE or a standby PE.
104: The PR sends a status synchronization manner, the identifier of the first PE, and information about the role of the first PE in the pool to the second PE.

According to this embodiment of the present invention, a flexible high availability mechanism is achieved. An HA role, a status synchronization source, and a status synchronization method are dynamically bound with a pool element role, leading to good expansibility, and it can be supported that more pool elements are added to a pool element pool to obtain high reliability. Moreover, synchronization links can be reduced, so that costs are greatly reduced, and a large-scale deployment of network functions virtualization can be better achieved.

Optionally, the status synchronization manner is:
sending, by an active PE in the pool, status information to the PR, and sending, by the PR, the status information to a standby PE in the pool; or
sending, by an active PE in the pool, status information to a third-party device, and sending, by the third-party device, the status information to a standby PE in the pool; or
sending, by an active PE in the pool, status information to the PR, requesting, by a standby PE in the pool, to acquire the status information from the PR, and sending, by the PR, the status information to the standby PE in the pool; or
sending, by an active PE in the pool, status information to a third-party device, requesting, by a standby PE in the pool, to acquire the status information from the third-party device, and sending, by the third-party device, the status information to the standby PE in the pool; or
synchronizing, by an active PE in the pool, status information to a standby PE in the pool.

Optionally, the first registration message further carries capability information of the first PE, and the second registration message further carries capability information of the second PE;
the determining, by the PR, a role of the first PE in the pool according to the identifier of the first PE and the identifier of the second PE, where the role is an active PE or a standby PE includes:
determining, by the PR, the role of the first PE in the pool according to the identifier of the first PE, the capability information of the first PE, the identifier of the second PE, and the capability information of the second PE, where the role is an active PE or a standby PE.

Optionally, the capability information of the first PE includes at least one of a throughput, performance, load, and a service related capability of the first PE, and the capability information of the second PE includes at least one of a throughput, performance, load, and a service related capability of the second PE.

Optionally, the identifier of the first PE includes at least one of address information, serial number information, and priority level information of the first PE, and the identifier of the second PE includes at least one of address information, serial number information, and priority level information of the second PE.

Optionally, the status synchronization manner, the identifier of the first PE, and the information about the role of the first PE are sent by extending an ASAP protocol message or by defining a new message.

Optionally, the status synchronization manner is:
sending, by an active PE in the pool, status information to the PR by using a synchronization link, and sending, by the PR, the status information to a standby PE in the pool by using the synchronization link; or
sending, by an active PE in the pool, status information to a third-party device by using a synchronization link, and sending, by the third-party device, the status information to a standby PE in the pool by using the synchronization link; or
sending, by an active PE in the pool, status information to the PR by using a synchronization link, requesting, by a standby PE in the pool by using the synchronization link, to acquire the status information from the PR, and sending, by the PR, the status information to the standby PE in the pool by using the synchronization link; or
sending, by an active PE in the pool, status information to a third-party device by using a synchronization link, requesting, by a standby PE in the pool by using the synchronization link, to acquire the status information from the third-party device, and sending, by the third-party device, the status information to the standby PE in the pool by using the synchronization link; or
synchronizing, by an active PE in the pool, status information to a standby PE in the pool by using a TCP link or a UDP link.

Optionally, the pool element may be a server, or may be a virtualized network function; and includes, but is not limited to, a virtual firewall device (vFW), a virtual access router (vAR), a virtual load balance device vLB), a virtual wide area network optimization controller (vWoC), a virtual intrusion detection system/intrusion protection system (vIDS/IPS), or virtual network address translation (vNAT).

Optionally, the pool register may be a device independent of the pool element, or may be a functional module distributed and embedded in all or some of pool elements or a pool element. There may also be multiple pool registers, and the multiple pool registers synchronize registered pool element information to each other, thereby implementing redundant backup for each other.

Optionally, after being created, each pool element needs to register with a pool register in time, so as to be registered in a pool of network functions virtualization, and after de-registration and update of an attribute, a status, and the like, the pool register also needs to be notified in time. The registration message includes an identifier, for example, address information, serial number information, priority level information, of a pool element, where the identifier may be used to determine the pool element. The registration message may also include capability information of the pool element. The capability information includes at least one of a throughput, performance, load, and a service related capability of the pool element. The service related capability refers to a capability related to a specific service of a pool element. For example, the service related capability of a vFW refers to a flow processing quantity, a working mode, a route quantity, and the like that are related to a firewall.

These information may be carried by using a pool element parameter in an ASAP REGISTRATION message of the IETF Rserpool ASAP protocol, and a format of the ASAP_REGISTRATION message is shown in FIG. 2.

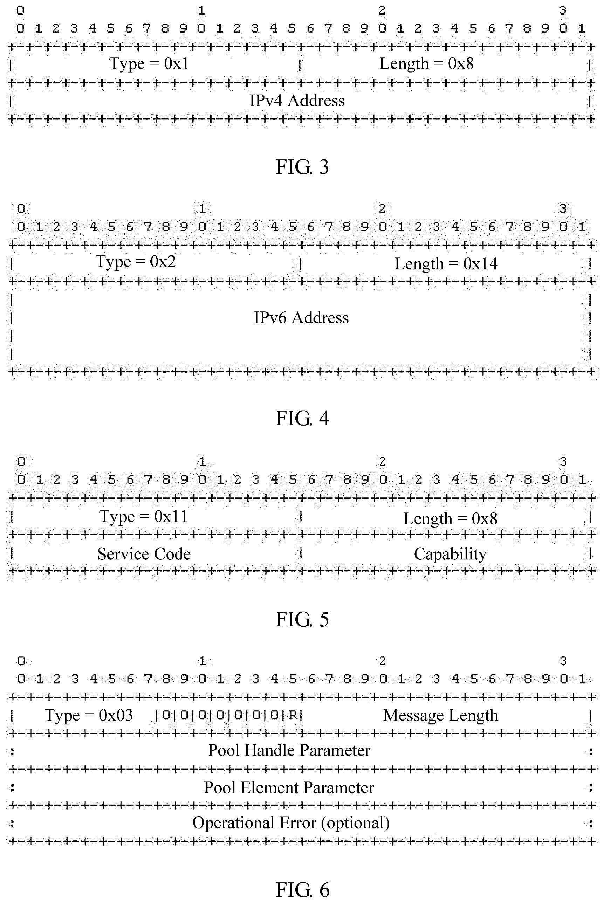

Location information is a type of parameter information and may be carried by using IPv4 address parameter information (as shown in FIG. 3) or IPv6 address parameter information (as shown in FIG. 4).

Capability information may be carried by defining capability parameter information, as shown in FIG. 5.

A service type (Service Code) field is used to define a type of a virtual network function. For example, 0 is reserved, 1 is a virtual firewall, and 2 is a virtual wide area network accelerating device.

A capability (Capability) field is used to define performance of a virtual network function. For example, 0 is reserved, 1 is a processing capability of 130 Mbps, and 2 is a processing capability of 200 Mbps.

The pool register determines a role of a pool element according to an identifier included in registration information reported by each pool element, where the role being an active PE or a standby PE. Generally, there is only one determined standby PE, and it is implemented that multiple active PEs share a same standby PE. A specific determining method may be determining the active PE or the standby PE by comprehensively considering at least one of address information, serial number information, and priority level information of each PE, or determining the active PE or the standby PE by more comprehensively considering at least one of address information, serial number information, priority level information, a throughput, performance, load, and a service related capability of each PE.

Certainly, the active PE or the standby PE may also be configured by a network controller or manually specified by a network administrator. Specific determining methods are not limited in this embodiment of the present invention and all fall within the protection scope of this embodiment of the present invention.

The following provides a method for determining, by a PR, an active PE or a standby PE by using a specific embodiment:
A PR receives a registration message sent by a pool element A and learns, according to the registration message, that the pool element A is a virtual firewall and an identifier, that is, an IP address, of the pool element A is 10.10.10.10.

The PR receives a registration message sent by a pool element B and learns, according to the registration message, that the pool element B is a virtual firewall and an identifier, that is, an IP address, of the pool element B is 10.10.10.20. The PR selects, according to the identifier of the pool element A and the identifier of the pool element B, a pool element having a smaller IP address as a standby role, and therefore, the PR may select A as a standby PE.

The PR sends a status synchronization manner, the identifier of the pool element A, and information about a role of the pool element A in a pool to the pool element B.

In this embodiment of the present invention, the PR may send a status synchronization manner and the information about the role of the pool element A in the pool to the pool element A.

If a registration message is subsequently received from a pool element C, after receiving the registration message, the PR learns, by using the registration message, that the pool element C is a virtual firewall and has a processing capability of 200 Mbps and an IP address is 10.10.10.1, and the PR may select a pool element having a strongest processing capability as a standby role, and therefore, the PR may select C as a standby PE. In another embodiment, after determining an active and standby relationship between B and A, to avoid that a service is affected by a change in a standby role, the PR may keep a standby role element unchanged, that is, keep A as a standby PE.

After a standby PE is determined, a status synchronization manner in this embodiment of the present invention may include, but is not limited to, the following manners:
First, a synchronization link is established between an active pool element and a pool register to transfer status information, and the active pool element periodically reports the status information to the pool register or a third-party device; and a synchronization link is also established between the pool register or the third-party device and a standby pool element to transfer status information, and the pool register or the third-party device periodically pushes the status information to the standby pool element.

Second, a synchronization link is established between an active pool element and a pool register to transfer status information, and the active pool element periodically reports the status information to the pool register or a third-party device; and the pool register or the third-party device saves the status information, and when the pool register or the third-party device finds through monitoring that the active pool element may be faulty, where a specific monitoring method may be live detection, and specific monitoring methods are not limited in this embodiment of the present invention and all fall within the protection scope of this embodiment of the present invention, a TCP link or a UDP link is established between the pool register or the third-party device and a standby pool element to send the saved status information to the standby pool element.

Third, a synchronization link is established between an active pool element and a pool register to transfer status information, the active pool element periodically reports the status information to the pool register or a third-party device, a synchronization link is also established between a standby PE and the PR or the third-party device, to request to acquire the status information from the PR or the third-party device, and the PR or the third-party device sends the status information to the standby PE by using the synchronization link between the PR or the third-party device and the standby PE.

Fourth, when a pool register finds through monitoring that an active pool element may be faulty, the pool register commands a standby pool element to request status information from the active pool element, a TCP link or a UDP link is established between the standby pool element and the active pool element to send a status information request message to the active pool element, so as to request status information of the active pool element, and after receiving the status information request message, the active pool element synchronizes the status information to the standby pool element by using the TCP link or the UDP link.

Specific status information may be varied with a type of a pool element. For example, a vFW may include an NAT Translation Table, TCP Connection States, UDP Connection States, and an ARP Table; and a vAR may include a routing table, an ARP Table, and an NAT Translation Table.

These information may be carried by defining a new message, and the following provides various newly-defined message content formats by using a vFW service node as an example.

### 1. General format

A registration message, a status message, and a de-registration message mentioned in this embodiment of the present invention are all located at the application layer, what is carried below may be the TCP protocol, a default port may be 30012, and a message body is in a json format and is transmitted in a text form.

### 2. Message format

### 2.1 vFW registration message

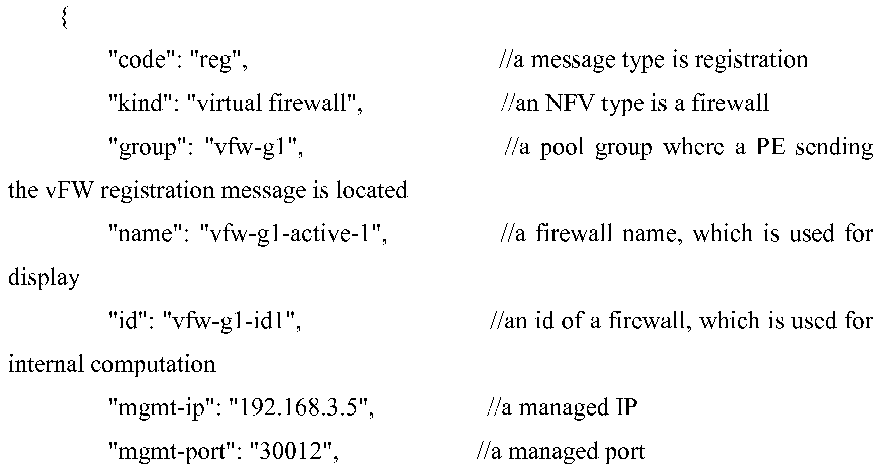

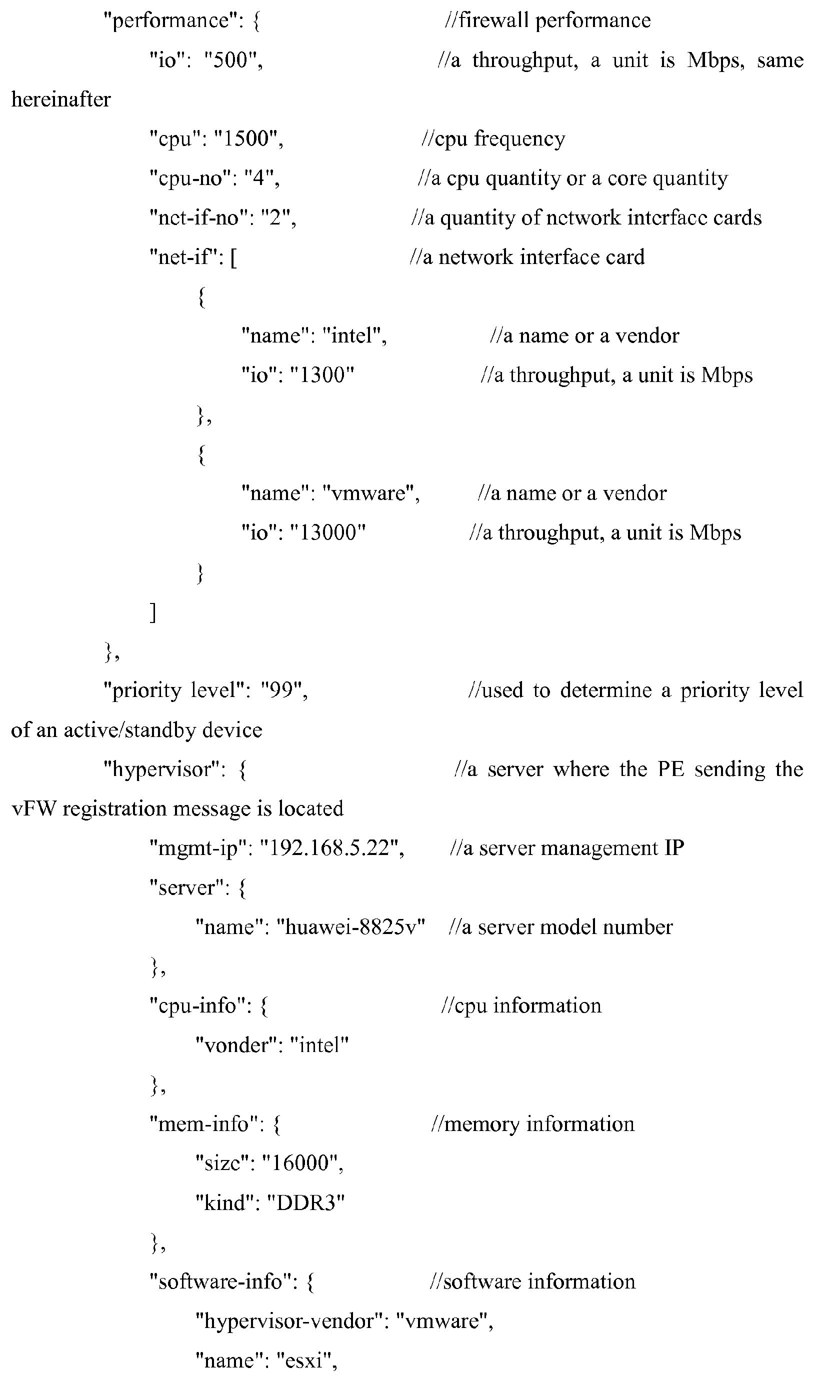

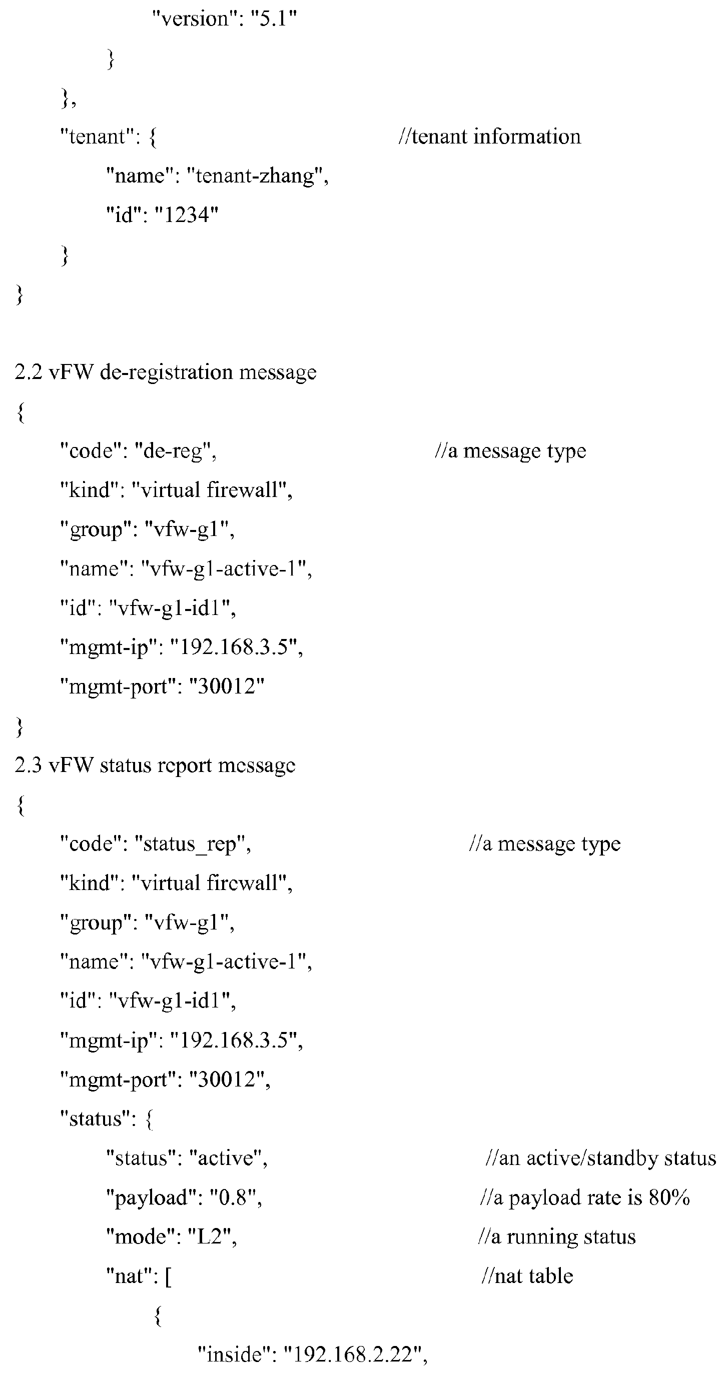

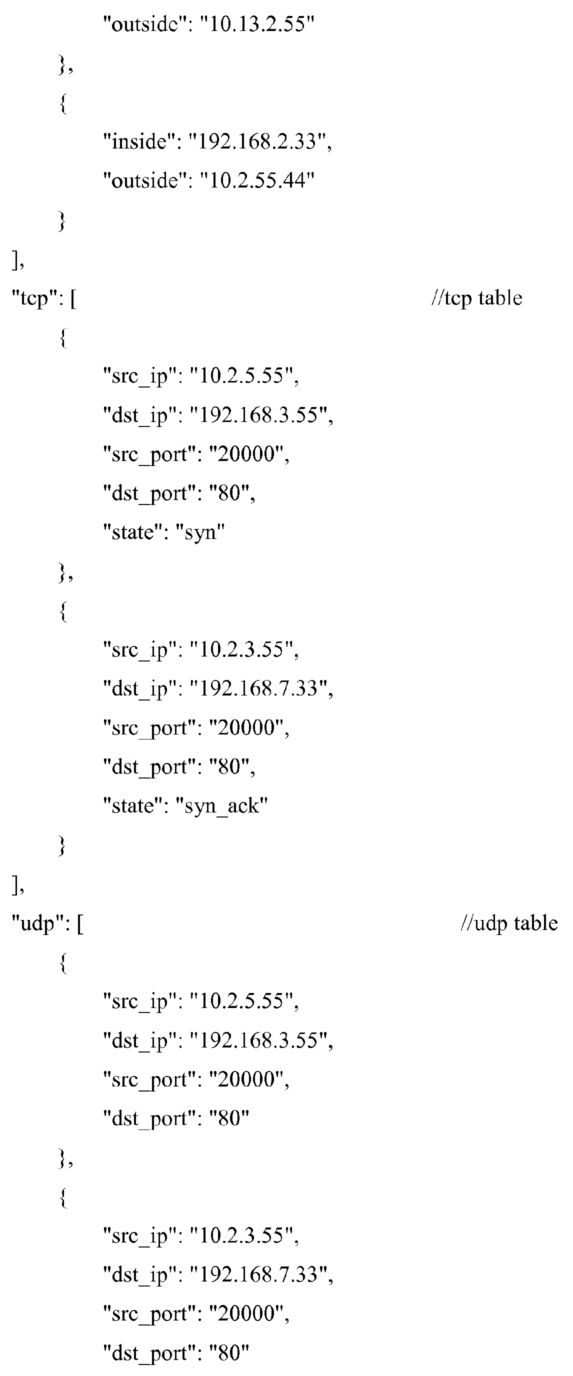

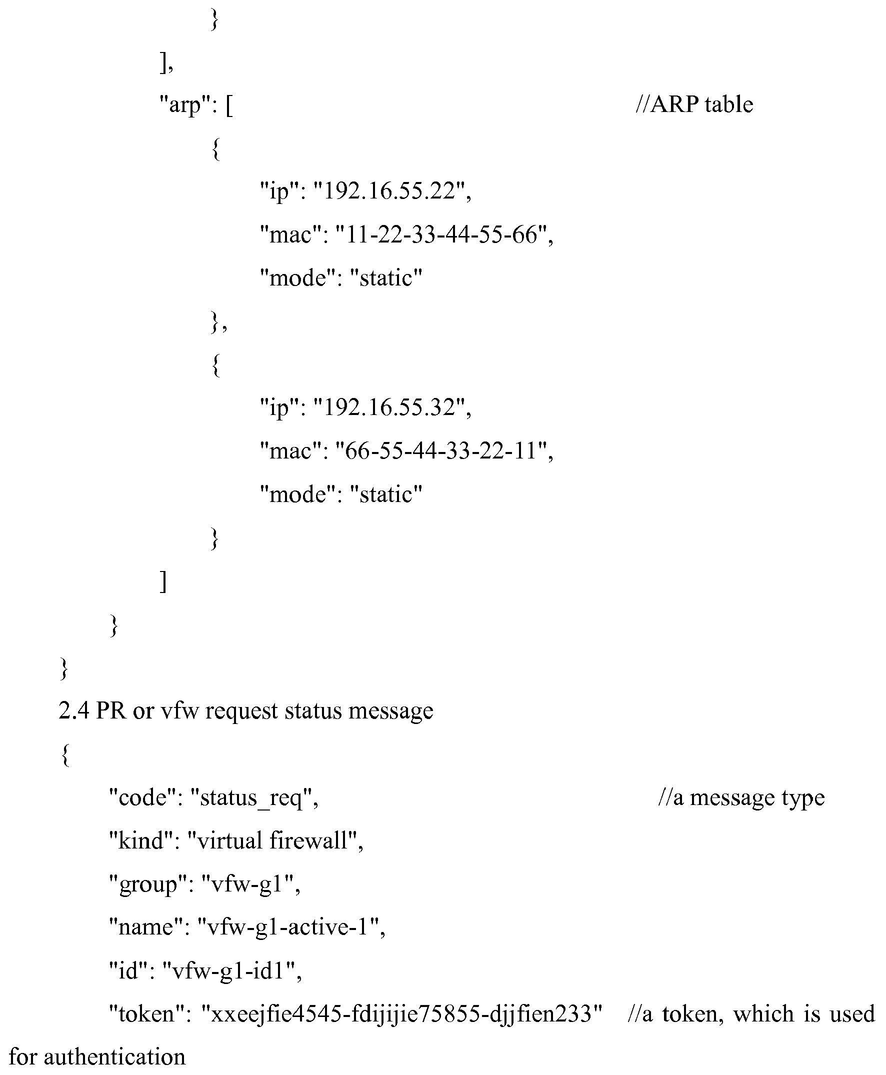

After determining a standby PE, a PR sends an identifier of the PE for functioning as a standby role and role information of the PE to a pool element in a pool.

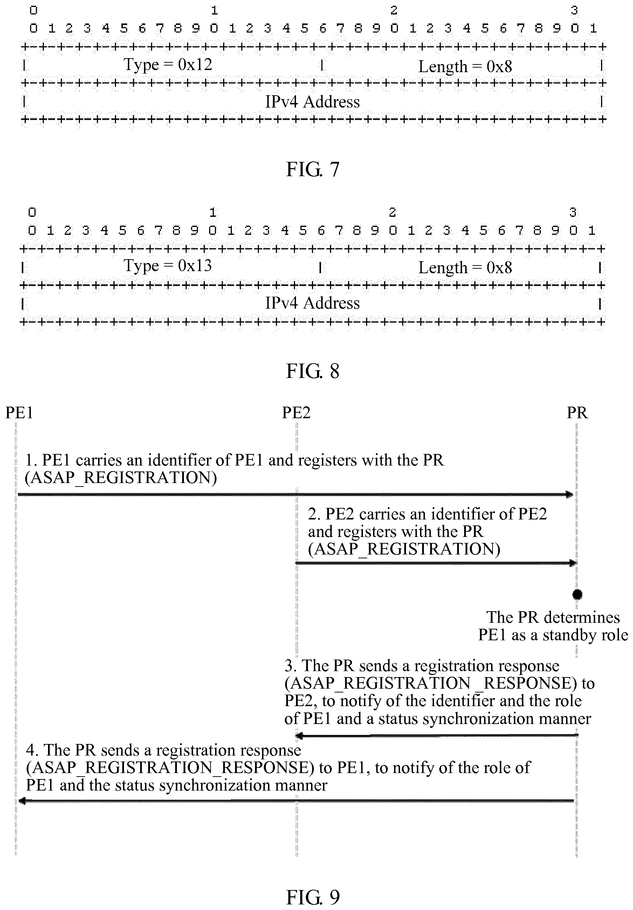

The PR sends an identifier and role information of a standby PE to the pool element in the pool by using a registration response message, for example, may be carried by using a pool element parameter in an ASAP_REGISTRATION_RESPONSE message of the IETF Rserpool ASAP protocol, and a format of the ASAP_REGISTRATION_RESPONSE message is shown in FIG. 6. A pool element parameter pool element parameter has a message header and the message header is followed by a tlv used for carrying the identifier and role information of the standby PE. As shown in FIG. 7, Type = 0x12, which represents that a role is a standby PE, and an IPv4 address represents an identifier of the standby PE.

According to this embodiment of the present invention, an identifier and/or role information of a determined active PE may also be sent to a PE in a pool, and a specific sending manner and a sent message are similar to those for sending an identifier and/or role information of a standby PE to a PE in a pool. Details are not described herein again.

Further, the PR may further send a status synchronization manner to the pool element in the pool, and sent information may also be carried by using a pool element parameter in an ASAP_REGISTRATION_RESPONSE message of the IETF Rserpool ASAP protocol. As shown in FIG. 8, Type = 0x13, which represents a manner for sending status synchronization, and an IPv4 address represents a specific status synchronization manner. Herein, if an IPv4 Address field is a multicast address or a broadcast address, it is agreed that a status is synchronized by means of multicast or broadcast; if an IPv4 Address field is an address of the PR, it means that forwarding is performed by means of the PR; if an IPv4 Address field is an address of a selected standby role, it means that status information is directly synchronized to a standby role; if an IPv4 Address field is an address of a third party, it means that transition is performed by means of the third party, where according to different specific implementation, "transition" may be that an active role synchronizes status information to the third party, and then, a standby role acquire the information from the third party, or may be that an active role synchronizes status information to the third party, and then the third party actively synchronizes the status information to a standby role.

A process example according to an embodiment of the present invention is shown in FIG. 9:
Step 1: PE1 carries an identifier of PE1 and registers with a PR (ASAP_REGISTRATION).
Step 2: PE2 carries an identifier of PE2 and registers with the PR (ASAP_REGISTRATION).

The PR determines, according to the identifier of each PE, that a role of PE1 is a standby PE.

Step 3: The PR sends a registration response (ASAP REGISTRATION RESPONSE) to PE2, to notify PE2 of an identifier and the role of PE1 and a status synchronization manner.

Step 4: The PR sends a registration response (ASAP_REGISTRATION_RESPONSE) to PE1, to notify PE1 of the role of PE1 and the status synchronization manner.

The following describes, with a specific embodiment, an active/standby switching scenario.

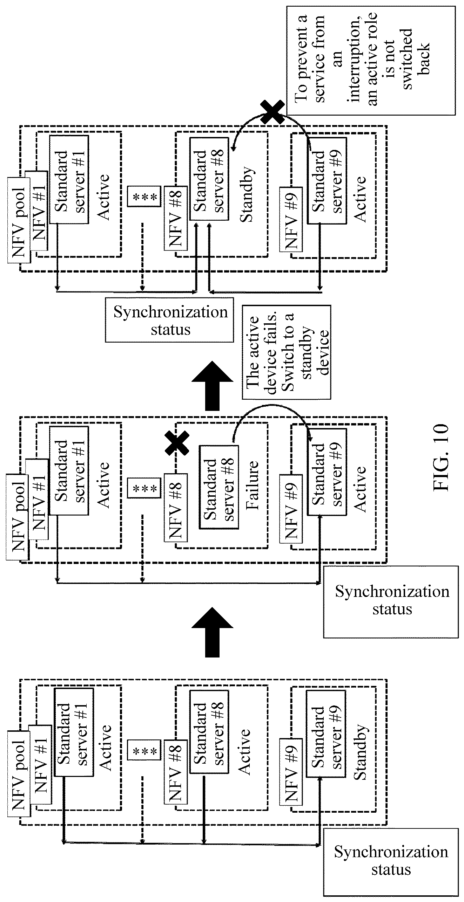

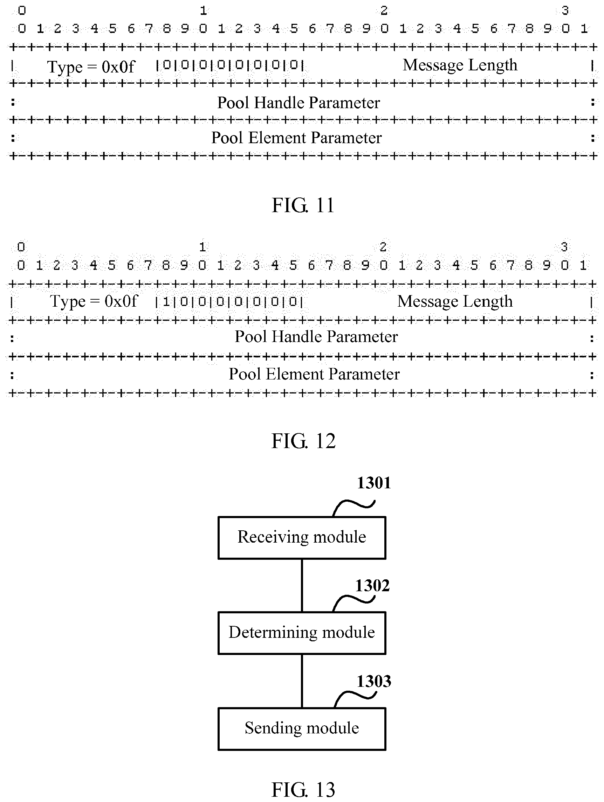

In actual running, an active role and a standby role dynamically change. As shown in FIG. 10, a server #9 is a standby server for #1 to #8 (on the left side of FIG. 9), and when the server #8 is faulty, the server #8 switches to a standby device, that is, the #9 server (in the middle of FIG. 10), then the server #9 becomes an active role, and the server #9 sends an update message to a PR (which is not shown in the figure) to notify the PR that the server #9 changes from a standby PE to an active PE. The message may be carried by defining an ASAP_UPDATE message of the IETF Rserpool ASAP protocol, and a format of the ASAP_UPDATE message may be shown in FIG. 11. The ASAP_UPDATE message carries an identifier of a pool element, and the identifier is a type of parameter information (Pool Element Parameter) and may be carried by using IPv4 address parameter information or IPv6 address parameter information.

Upon receiving ASAP_UPDATE, the pool register learns that the pool element has changed from a standby role to an active role; and in this case, there is no standby role in the pool, the pool register may additionally select a standby role according to an identifier and/or capability information of each PE in the pool and then notify all pool elements of information about the new standby role by using a specific notification message ASAP_UPDATE (whose format is shown in FIG. 12 and is similar to a format of FIG. 11: location information of a Pool Element Parameter is also used); and it may also be that after the pool register where a fault occurs is recovered from the fault, the pool register is registered and added to the pool again, and then the pool element is selected as a new standby role. After the server #9 becomes an active PE, if there is a server newly added to the pool, the new server may also be selected as a standby PE according to an identifier and/or capability information of each server in the pool.

Further, the PR may further send the status synchronization manner to the pool element.

According to this embodiment of the present invention, a flexible high availability mechanism is achieved. An HA role, a status synchronization source, and a status synchronization method are dynamically bound with a pool element role, leading to good expansibility, and it can be supported that more pool elements are added to a pool element pool to obtain high reliability. Moreover, synchronization links can be reduced, so that costs are greatly reduced, and a large-scale deployment of network functions virtualization can be better achieved.

Based on a same design concept, an embodiment of the present invention further provides a PR. Referring to FIG. 13, the pool register includes:
a receiving module 1301, configured to receive a first registration message sent by a first PE, where the first registration message is used to add the first PE to a pool, and the first registration message carries an identifier of the first PE; and configured to receive a second registration message sent by a second PE, where the second registration message is used to add the second PE to the pool, and the second registration message carries an identifier of the second PE;
a determining module 1302, configured to determine a role of the first PE in the pool according to the identifier of the first PE and the identifier of the second PE, where the role is an active PE or a standby PE; and
a sending module 1303, configured to send a status synchronization manner, the identifier of the first PE, and information about the role of the first PE in the pool to the second PE.

Optionally, the status synchronization manner is:
sending, by an active PE in the pool, status information to the PR, and sending, by the PR, the status information to a standby PE in the pool; or
sending, by an active PE in the pool, status information to a third-party device, and sending, by the third-party device, the status information to a standby PE in the pool; or
sending, by an active PE in the pool, status information to the PR, requesting, by a standby PE in the pool, to acquire the status information from the PR, and sending, by the PR, the status information to the standby PE in the pool; or
sending, by an active PE in the pool, status information to a third-party device, requesting, by a standby PE in the pool, to acquire the status information from the third-party device, and sending, by the third-party device, the status information to the standby PE in the pool; or
synchronizing, by an active PE in the pool, status information to a standby PE in the pool.

Optionally, the first registration message further carries capability information of the first PE, and the second registration message further carries capability information of the second PE; and the determining module 1302 is specifically configured to determine the role of the first PE in the pool according to the identifier of the first PE, the capability information of the first PE, the identifier of the second PE, and the capability information of the second PE, where the role is an active PE or a standby PE.

Optionally, the identifier of the first PE includes at least one of address information, serial number information, and priority level information of the first PE, and the identifier of the second PE includes at least one of address information, serial number information, and priority level information of the second PE.

Optionally, the sending module 1302 is specifically configured to send the status synchronization manner, the identifier of the first PE, and the information about the role of the first PE by extending an ASAP protocol message or by defining a new message.

Optionally, the status synchronization manner is:
sending, by an active PE in the pool, status information to the PR by using a synchronization link, and sending, by the PR, the status information to a standby PE in the pool by using the synchronization link; or
sending, by an active PE in the pool, status information to a third-party device by using a synchronization link, and sending, by the third-party device, the status information to a standby PE in the pool by using the synchronization link; or
sending, by an active PE in the pool, status information to the PR by using a synchronization link, requesting, by a standby PE in the pool by using the synchronization link, to acquire the status information from the PR, and sending, by the PR, the status information to the standby PE in the pool by using the synchronization link; or
sending, by an active PE in the pool, status information to a third-party device by using a synchronization link, requesting, by a standby PE in the pool by using the synchronization link, to acquire the status information from the third-party device, and sending, by the third-party device, the status information to the standby PE in the pool by using the synchronization link; or
synchronizing, by an active PE in the pool, status information to a standby PE in the pool by using a TCP link or a UDP link.

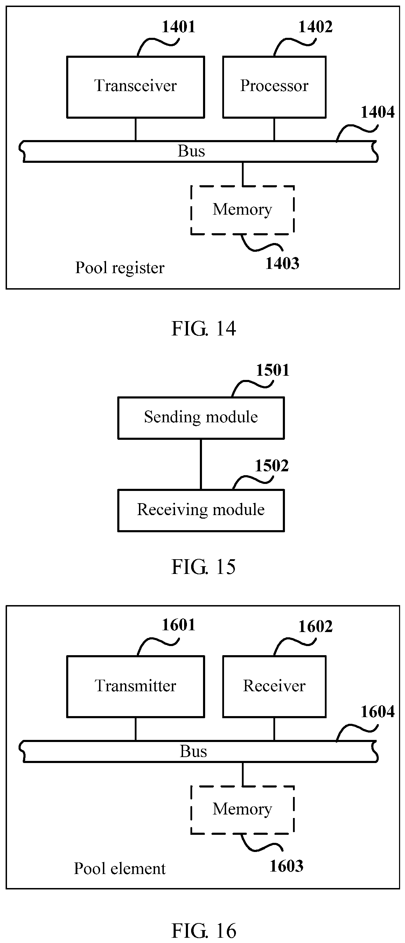

An embodiment of the present invention further provides a PR. Referring to FIG. 14, the PR includes a transceiver 1401, a processor 1402, a memory 1403, and a bus 1404, where the transceiver 1401, the processor 1402, and the memory 1403 are connected and communicate with each other by using the bus 1404.

The bus 1404 may be an industry standard architecture (ISA) bus, a peripheral component interconnect (PCI) bus, an extended industry standard architecture (EISA) bus, or the like. The bus 1404 may be divided into an address bus, a data bus, a control bus, and the like. For convenience of representation, only one line is used for representation in the figure, but it does not indicate that there is only one bus or one type of buses.

The memory 1403 is configured to store program code, and the program code includes an operation instruction. The memory 1403 may include a high-speed random access memory (RAM), or may also include a non-volatile memory, for example, a magnetic disk storage.

The processor 1402 may be a central processing unit (CPU) or an application-specific integrated circuit (ASIC), or may be configured as one or more integrated circuits that implement the embodiments of the present application.

The transceiver 1401 is configured to receive a first registration message sent by a first PE, where the first registration message is used to add the first PE to a pool, and the first registration message carries an identifier of the first PE; and configured to receive a second registration message sent by a second PE, where the second registration message is used to add the second PE to the pool, and the second registration message carries an identifier of the second PE.

The processor 1402 is configured to invoke the program code that is in the memory 1403, to perform the following operations:
determining a role of the first PE in the pool according to the identifier of the first PE and the identifier of the second PE, where the role is an active PE or a standby PE; and sending information about the standby PE to a PE in the pool.

The transceiver 1401 is further configured to send a status synchronization manner, the identifier of the first PE, and information about the role of the first PE in the pool to the second PE.

As shown in FIG. 15, an embodiment of the present invention further provides a PE, where the PE is a first PE, including:
a sending module 1501, configured to send a registration message to a PR, where the registration message is used to add the PE to a pool, and the registration message carries an identifier of the PE; and
a receiving module 1502, configured to receive a status synchronization manner, an identifier of a second PE, and information about a role of the second PE in the pool that are sent by the PR, where the information about the role is information that the second PE is an active PE or a standby PE. For example, the second PE and the first PE may be a same PE, and may also be different PEs.

Optionally, the status synchronization manner is:
sending, by an active PE in the pool, status information to the PR, and sending, by the PR, the status information to a standby PE in the pool; or
sending, by an active PE in the pool, status information to a third-party device, and sending, by the third-party device, the status information to a standby PE in the pool; or
sending, by an active PE in the pool, status information to the PR, requesting, by a standby PE in the pool, to acquire the status information from the PR, and sending, by the PR, the status information to the standby PE in the pool; or
sending, by an active PE in the pool, status information to a third-party device, requesting, by a standby PE in the pool, to acquire the status information from the third-party device, and sending, by the third-party device, the status information to the standby PE in the pool; or
synchronizing, by an active PE in the pool, status information to a standby PE in the pool.

An embodiment of the present invention further provides a PE. Referring to FIG. 16, the PE includes a transmitter 1601, a receiver 1602, a memory 1603, and a bus 1604, where the transmitter 1601, the receiver 1602, and the memory 1603 are connected and communicate with each other by using the bus 1604.

The bus 1604 may be an ISAbus, a PCI bus, an EISA bus, or the like. The bus 1604 may be divided into an address bus, a data bus, a control bus, and the like. For convenience of representation, only one line is used for representation in the figure, but it does not indicate that there is only one bus or one type of buses.

The memory 1603 is configured to store program code, and the program code includes an operation instruction. The memory 1603 may include a high-speed random access memory (RAM, or may also include a non-volatile memory, for example, a magnetic disk storage.

The transmitter 1601 is configured to send a registration message to a PR, where the registration message is used to add the PE to a pool, and the registration message carries an identifier of the PE.

The receiver 1602 is configured to receive a status synchronization manner, an identifier of a second PE, and information about a role of the second PE in the pool that are sent by the PR, where the information about the role is information that the second PE is an active PE or a standby PE.

Because functional implementation of the apparatus according to this embodiment of the present invention and that of the method both belong to a same inventive concept, reference may be made to the method, and details are not described herein again.

According to the embodiments of the present invention, a HA mechanism is achieved. An HA role, a status synchronization source, and a status synchronization method are dynamically bound with a pool element role, leading to good expansibility, and it can be supported that more pool elements are added to a pool element pool to obtain high reliability. Moreover, synchronization links can be reduced, so that costs are greatly reduced, and a large-scale deployment of network functions virtualization can be better achieved.

A person of ordinary skill in the art may be aware that, in combination with the examples described in the embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and module, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected according to actual needs to achieve the objectives of the solutions of the embodiments.

In addition, functional modules in the embodiments of the present invention may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A pool element, PE, status information synchronization method, comprising:
receiving (101), by a pool register, PR, a first registration message sent by a first PE, wherein the first registration message is used to add the first PE to a pool, and the first registration message carries an identifier of the first PE and capability information of the first PE, wherein the capability information of the first PE comprises at least one of a throughput, performance, load, and a service related capability of the first PE;
receiving (102), by the PR, a second registration message sent by a second PE, wherein the second registration message is used to add the second PE to the pool, and the second registration message carries an identifier of the second PE and capability information of the second PE, wherein the capability information of the second PE comprises at least one of a throughput, performance, load, and a service related capability of the second PE;
determining (103), by the PR, a role of the first PE in the pool according to the identifier of the first PE, the capability information of the first PE, the identifier of the second PE, and the capability information of the second PE, wherein the role is an active PE or a standby PE; and
sending (104), by the PR, a status synchronization manner, the identifier of the first PE, and information about the role of the first PE in the pool to the second PE, by extending an Aggregate Server Access Protocol, ASAP, protocol message.

2. The method according to claim 1, wherein the status synchronization manner is:
sending, by an active PE in the pool, status information to the PR, and sending, by the PR, the status information to a standby PE in the pool; or
sending, by an active PE in the pool, status information to a third-party device, and sending, by the third-party device, the status information to a standby PE in the pool; or
sending, by an active PE in the pool, status information to the PR, requesting, by a standby PE in the pool, to acquire the status information from the PR, and sending, by the PR, the status information to the standby PE in the pool; or
sending, by an active PE in the pool, status information to a third-party device, requesting, by a standby PE in the pool, to acquire the status information from the third-party device, and sending, by the third-party device, the status information to the standby PE in the pool; or
synchronizing, by an active PE in the pool, status information to a standby PE in the pool.

3. The method according to claim 1 or 2, wherein the identifier of the first PE comprises at least one of address information, serial number information, and priority level information of the first PE, and the identifier of the second PE comprises at least one of address information, serial number information, and priority level information of the second PE.

4. A pool register, PR, comprising:
a receiving module (1301), configured to receive a first registration message sent by a first pool element, PE, wherein the first registration message is used to add the first PE to a pool, and the first registration message carries an identifier of the first PE and capability information of the first PE, wherein the capability information of the first PE comprises at least one of a throughput, performance, load, and a service related capability of the first PE; and configured to receive a second registration message sent by a second PE, wherein the second registration message is used to add the second PE to the pool, and the second registration message carries an identifier of the second PE and capability information of the second PE, wherein the capability information of the second PE comprises at least one of a throughput, performance, load, and a service related capability of the second PE;
a determining module (1302), configured to determine a role of the first PE in the pool according to the identifier of the first PE, the capability information of the first PE, the identifier of the second PE, and the capability information of the second PE, wherein the role is an active PE or a standby PE; and
a sending module (1303), configured to send a status synchronization manner, the identifier of the first PE, and information about the role of the first PE in the pool to the second PE, by extending an Aggregate Server Access Protocol, ASAP, protocol message.

5. The PR according to claim 4, wherein
the identifier of the first PE comprises at least one of address information, serial number information, and priority level information of the first PE, and the identifier of the second PE comprises at least one of address information, serial number information, and priority level information of the second PE.

6. A pool element, PE, wherein the PE is a first PE, comprising:
a sending module (1502), configured to send a registration message to a pool register, PR, wherein the registration message is used to add the PE to a pool, and the registration message carries an identifier of the PE and capability information of the PE, wherein the capability information of the PE comprises at least one of a throughput, performance, load, and a service related capability of the PE; and
a receiving module (1501), configured to receive a status synchronization manner, an identifier of a second PE, and information about a role of the second PE in the pool that are sent by the PR by extending an Aggregate Server Access Protocol, ASAP, protocol message, wherein the information about the role is information that the second PE is an active PE or a standby PE.

## Patentansprüche

1. Synchronisationsverfahren für "Pool"-Element-Statusinformationen bzw. PE-Statusinformationen, das Folgendes umfasst:
Empfangen (101), durch ein "Pool"-Register bzw. PR, einer ersten Registrierungsnachricht, die durch ein erstes PE gesendet wird, wobei die erste Registrierungsnachricht zum Hinzufügen des ersten PE zu einem "Pool" verwendet wird und die erste Registrierungsnachricht eine Kennung des ersten PE und
Fähigkeitsinformationen des ersten PE führt, wobei die Fähigkeitsinformationen des ersten PE einen Durchsatz und/oder eine Leistung und/oder eine Belastung und/oder eine dienstbezogene Fähigkeit des ersten PE umfassen;
Empfangen (102), durch das PR, einer zweiten Registrierungsnachricht, die durch ein zweites PE gesendet wird, wobei die zweite Registrierungsnachricht zum Hinzufügen des zweiten PE zum "Pool" verwendet wird und die zweite Registrierungsnachricht eine Kennung des zweiten PE und Fähigkeitsinformationen des zweiten PE führt, wobei die Fähigkeitsinformationen des zweiten PE einen Durchsatz und/oder eine Leistung und/oder eine Belastung und/oder eine dienstbezogene Fähigkeit des zweiten PE umfassen;
Bestimmen (103), durch das PR, einer Funktion des ersten PE im "Pool" gemäß der Kennung des ersten PE, den Fähigkeitsinformationen des ersten PE, der Kennung des zweiten PE und der Fähigkeitsinformationen des zweiten PE, wobei die Funktion ein aktives PE oder ein Standby-PE ist; und
Senden (104), durch das PR, einer Statussynchronisationsweise, der Kennung des ersten PE und von Informationen über die Funktion des ersten PE im "Pool" zum zweiten PE, indem eine "Aggregate Server Access Protocol"-Protokollnachricht bzw. ASAP-Protokollnachricht erweitert wird.

2. Verfahren nach Anspruch 1, wobei die Statussynchronisationsweise Folgendes ist: Senden, durch ein aktives PE im "Pool", von Statusinformationen zum PR und Senden, durch das PR, der Statusinformationen zu einem Standby-PE im "Pool" oder
Senden, durch ein aktives PE im "Pool", von Statusinformationen zu einer Drittparteieinrichtung und Senden, durch die Drittparteieinrichtung, der Statusinformationen zu einem Standby-PE im "Pool" oder
Senden, durch ein aktives PE im "Pool", von Statusinformationen zum PR, Auffordern, durch ein Standby-PE im "Pool", die Statusinformationen vom PR zu erfassen, und Senden, durch das PR, der Statusinformationen zum Standby-PE im "Pool" oder
Senden, durch ein aktives PE im "Pool", von Statusinformationen zu einer Drittparteieinrichtung, Auffordern, durch ein Standby-PE im "Pool", die Statusinformationen von der Drittparteieinrichtung zu erfassen, und Senden, durch die Drittparteieinrichtung, der Statusinformationen zum Standby-PE im "Pool" oder Synchronisieren, durch ein aktives PE im "Pool", von Statusinformationen mit einem Standby-PE im "Pool".

3. Verfahren nach Anspruch 1 oder 2, wobei die Kennung des ersten PE Adressinformationen und/oder Seriennummerninformationen und/oder Prioritätsniveauinformationen des ersten PE umfasst und die Kennung des zweiten PE Adressinformationen und/oder Seriennummerninformationen und/oder Prioritätsniveauinformationen des zweiten PE umfasst.

4. "Pool"-Register bzw. PR, das Folgendes umfasst:
ein Empfangsmodul (1301), das konfiguriert ist zum Empfangen einer ersten Registrierungsnachricht, die durch ein erstes "Pool"-Element bzw. PE gesendet wird, wobei die erste Registrierungsnachricht zum Hinzufügen des ersten PE zu einem "Pool" verwendet wird und die erste Registrierungsnachricht eine Kennung des ersten PE und Fähigkeitsinformationen des ersten PE führt, wobei die Fähigkeitsinformationen des ersten PE einen Durchsatz und/oder eine Leistung und/oder eine Belastung und/oder eine dienstbezogene Fähigkeit des ersten PE umfassen; und konfiguriert ist zum Empfangen einer zweiten Registrierungsnachricht, die durch ein zweites PE gesendet wird, wobei die zweite Registrierungsnachricht zum Hinzufügen des zweiten PE zum "Pool" verwendet wird und die zweite Registrierungsnachricht eine Kennung des zweiten PE und Fähigkeitsinformationen des zweiten PE führt, wobei die Fähigkeitsinformationen des zweiten PE einen Durchsatz und/oder eine Leistung und/oder eine Belastung und/oder eine dienstbezogene Fähigkeit des zweiten PE umfassen;
ein Bestimmungsmodul (1302), das konfiguriert ist zum Bestimmen einer Funktion des ersten PE im "Pool" gemäß der Kennung des ersten PE, den Fähigkeitsinformationen des ersten PE, der Kennung des zweiten PE und der Fähigkeitsinformationen des zweiten PE, wobei die Funktion ein aktives PE oder ein Standby-PE ist; und
ein Sendemodul (1303), das konfiguriert ist zum Senden einer Statussynchronisationsweise, der Kennung des ersten PE und von Informationen über die Funktion des ersten PE im "Pool" zum zweiten PE, indem eine "Aggregate Server Access Protocol"-Protokollnachricht bzw. ASAP-Protokollnachricht erweitert wird.

5. PR nach Anspruch 4, wobei
die Kennung des ersten PE Adressinformationen und/oder Seriennummerninformationen und/oder Prioritätsniveauinformationen des ersten PE umfasst und die Kennung des zweiten PE Adressinformationen und/oder Seriennummerninformationen und/oder Prioritätsniveauinformationen des zweiten PE umfasst.

6. "Pool"-Element bzw. PE, wobei das PE ein erstes PE ist, das Folgendes umfasst:
ein Sendemodul (1502), das konfiguriert ist zum Senden einer Registrierungsnachricht zu einem "Pool"-Register bzw. PR, wobei die Registrierungsnachricht zum Hinzufügen des PE zu einem "Pool" verwendet wird und die Registrierungsnachricht eine Kennung des PE und Fähigkeitsinformationen des PE führt, wobei die Fähigkeitsinformationen des PE einen Durchsatz und/oder eine Leistung und/oder eine Belastung und/oder eine dienstbezogene Fähigkeit des PE umfassen; und
ein Empfangsmodul (1501), das konfiguriert ist zum Empfangen einer Statussynchronisationsweise, einer Kennung eines zweiten PE und von Informationen über eine Funktion des zweiten PE im "Pool", die durch das PR gesendet werden, indem eine "Aggregate Server Access Protocol"-Protokollnachricht bzw. ASAP-Protokollnachricht erweitert wird, wobei die Informationen über die Funktion Informationen sind, dass das zweite PE ein aktives PE oder ein Standby-PE ist.

## Revendications

1. Procédé de synchronisation d'informations d'état d'élément de pool, PE, comportant les étapes consistant à :
faire recevoir (101), par un registre de pool, PR, un premier message d'inscription émis par un premier PE, le premier message d'inscription étant utilisé pour ajouter le premier PE à un pool, et le premier message d'inscription transportant un identifiant du premier PE et des informations d'aptitude du premier PE, les informations d'aptitude du premier PE comportant au moins une information parmi un débit, des performances, une charge et une aptitude liée au service du premier PE ;
faire recevoir (102), par le PR, un deuxième message d'inscription émis par un deuxième PE, le deuxième message d'inscription étant utilisé pour ajouter le deuxième PE au pool, et le deuxième message d'inscription transportant un identifiant du deuxième PE et des informations d'aptitude du deuxième PE, les informations d'aptitude du deuxième PE comportant au moins une information parmi un débit, des performances, une charge et une aptitude liée au service du deuxième PE ;
faire déterminer (103), par le PR, un rôle du premier PE dans le pool d'après l'identifiant du premier PE, les informations d'aptitude du premier PE, l'identifiant du deuxième PE, et les informations d'aptitude du deuxième PE, le rôle étant un PE actif ou un PE de réserve ; et
faire envoyer (104), par le PR, une méthode de synchronisation d'état, l'identifiant du premier PE, et une information concernant le rôle du premier PE dans le pool au deuxième PE, en étendant un message de protocole de Protocole d'accès de serveur agrégé, ASAP.

2. Procédé selon la revendication 1, la méthode de synchronisation d'état consistant à : faire envoyer, par un PE actif dans le pool, des informations d'état au PR, et faire envoyer, par le PR, les informations d'état à un PE de réserve dans le pool ; ou
faire envoyer, par un PE actif dans le pool, des informations d'état à un dispositif tiers, et faire envoyer, par le dispositif tiers, les informations d'état à un PE de réserve dans le pool ; ou
faire envoyer, par un PE actif dans le pool, des informations d'état au PR, faire demander, par un PE de réserve dans le pool, l'acquisition des informations d'état à partir du PR, et faire envoyer, par le PR, les informations d'état au PE de réserve dans le pool ; ou
faire envoyer, par un PE actif dans le pool, des informations d'état à un dispositif tiers, faire demander, par un PE de réserve dans le pool, l'acquisition des informations d'état à partir du dispositif tiers, et faire envoyer, par le dispositif tiers, les informations d'état au PE de réserve dans le pool ; ou
faire synchroniser, par un PE actif dans le pool, des informations d'état vers un PE de réserve dans le pool.

3. Procédé selon la revendication 1 ou 2, l'identifiant du premier PE comportant au moins une information parmi une information d'adresse, une information de numéro de série et une information de niveau de priorité du premier PE, et l'identifiant du deuxième PE comportant au moins une information parmi une information d'adresse, une information de numéro de série et une information de niveau de priorité du deuxième PE.

4. Registre de pool, PR, comportant :
un module (1301) de réception, configuré pour recevoir un premier message d'inscription émis par un premier élément de pool, PE, le premier message d'inscription étant utilisé pour ajouter le premier PE à un pool, et le premier message d'inscription transportant un identifiant du premier PE et des informations d'aptitude du premier PE, les informations d'aptitude du premier PE comportant au moins une information parmi un débit, des performances, une charge et une aptitude liée au service du premier PE ; et configuré pour recevoir un deuxième message d'inscription émis par un deuxième PE, le deuxième message d'inscription étant utilisé pour ajouter le deuxième PE au pool, et le deuxième message d'inscription transportant un identifiant du deuxième PE et des informations d'aptitude du deuxième PE, les informations d'aptitude du deuxième PE comportant au moins une information parmi un débit, des performances, une charge et une aptitude liée au service du deuxième PE ;
un module (1302) de détermination, configuré pour déterminer un rôle du premier PE dans le pool d'après l'identifiant du premier PE, les informations d'aptitude du premier PE, l'identifiant du deuxième PE, et les informations d'aptitude du deuxième PE, le rôle étant un PE actif ou un PE de réserve ; et
un module (1303) d'envoi, configuré pour envoyer une méthode de synchronisation d'état, l'identifiant du premier PE, et information concernant le rôle du premier PE dans le pool au deuxième PE, en étendant un message de protocole de Protocole d'accès de serveur agrégé, ASAP.

5. PR selon la revendication 4, l'identifiant du premier PE comportant au moins une information parmi une information d'adresse, une information de numéro de série et une information de niveau de priorité du premier PE, et l'identifiant du deuxième PE comportant au moins une information parmi une information d'adresse, une information de numéro de série et une information de niveau de priorité du deuxième PE.

6. Élément de pool, PE, le PE étant un premier PE, comportant :
un module (1502) d'envoi, configuré pour envoyer un message d'inscription à un registre de pool, PR, le message d'inscription étant utilisé pour ajouter le PE à un pool, et le message d'inscription transportant un identifiant du PE et des informations d'aptitude du PE, les informations d'aptitude du PE comportant au moins une information parmi un débit, des performances, une charge et une aptitude liée au service du PE ; et
un module (1501) de réception, configuré pour recevoir une méthode de synchronisation d'état, un identifiant d'un deuxième PE et une information concernant un rôle du deuxième PE dans le pool, qui sont émis par le PR en étendant un message de protocole de Protocole d'accès de serveur agrégé, ASAP, l'information concernant le rôle étant une information selon laquelle le deuxième PE est un PE actif ou un PE de réserve.
